# EUROPEAN PATENT SPECIFICATION

(11) **EP 3 978 213 B1**
(45) Date of publication and mention of the grant of the patent: **12.07.2023**
(21) Application number: 21200551.6
(22) Date of filing: 01.10.2021
(51) Int. Cl.: B29B 7/00, B29B 7/82, B29B 7/24, B29B 7/28, B29B 7/60, B29B 7/72

(54) **METHOD AND PLANT FOR THE PRODUCTION OF POLYMER ADHESIVES**
VERFAHREN UND ANLAGE ZUR HERSTELLUNG VON POLYMERKLEBSTOFFEN
PROCÉDÉ ET INSTALLATION POUR LA PRODUCTION D'ADHÉSIFS POLYMÈRES

(30) Priority: 01.10.2020 IT 202000023161
(43) Date of publication of application: 06.04.2022
(73) Proprietor: Galbiati, Pietro, 6500 Bellinzona (CH)
(72) Inventor: Galbiati, Irina, 6500 Bellinzona (CH)
(74) Representative: Postiglione, Ferruccio

(56) References cited:
- WO-A1-2011/136069
- WO-A1-2019/165016
- DE-A1- 4 313 171
- JP-A- 2019 188 383
- US-A1- 2011 148 000
- US-A1- 2014 193 630
- US-A1- 2019 126 223

## Description

### Invention field

The present invention concerns a method of production of sealants and polymeric adhesives, in particular polyurethanes. The present invention concerns a production method capable of improving the productivity and production flexibility of the above-mentioned sealants and polymer adhesives, reducing the environmental impact and keeping the production cost reduced.

In another aspect, the present invention concerns the production plant of sealants and polymer adhesives. In particular, the present invention concerns a production plant capable of improving productivity and environmental impact while keeping the cost of producing polymer adhesives and sealants reduced.

### Prior art

Polyurethane sealants are based on single-component or multi-component polyurethane resins of the hygrohardening type able to guarantee high adhesion on many surfaces, including concrete, metal, wood, stone, brick and glass.

Polyurethane polymers are endowed with excellent chemical resistance to greases, lubricants and detergents, as well as a total non-absorbency that makes them hygienic and washable. Their great flexibility combined with a great elastic return (also called working movement capacity) make them elastic for glues in general, both in the high modulus versions and in the medium elastic modulus versions.

Although the original function of the sealant was to ensure continuity to the structures by preventing the passage of air and water, it is equally true that today sealants are given the task of preserving structures from breakage and corrosion, ensuring thermo-acoustic insulation, contributing to energy saving, passive protection from fire and even acting as structural elements.

Polymer sealants are normally used in paste form, including oligomeric polymers following a chemical process that includes the phases of preparation of basic raw materials, creation of an active mixture for the production of paste and modification of the prepared base to ensure the necessary physical and chemical performance.

An important condition of the production process is the control of the polymerization process of the paste mixture. At the main stages of production, the paste must obtain the desired structure with an adequate supply of rigidity and elasticity. As support for certain properties and characteristics, special modifiers and plasticizers can be added to the mixture to improve the special qualities of the material, such as fire resistance or moisture resistance.

In this regard, the main and most common elements of the raw material include polyesters, propellants, isocyanates, polyols and polyisocyanate with various chemical additives. For example, catalysts can be added to accelerate certain reactions between different groups of components. In general, the number of components of the polyester composition can be as high as ten, taking into account the components that stabilize the chemical production processes.

Although the modern production of polymer adhesives is increasingly focused on facilitating the process of their technical application, the production process plays a particularly important role.

Currently, polymer sealants are produced through two types of production processes according to production needs, i.e. batch process, discontinuous, or continuous in-line process. The batch process allows you to operate with extreme flexibility, adapting the production to the characteristics required for the sealant in production. On the contrary, the continuous in-line process presents difficulties in flexibility and is more suitable for large single-product productions.

In both cases, the production process consists of the production of an adhesive in an *"oligomeric"* state inside a reactor with the reaction between the basic raw materials and the catalyst, that is, a material formed by polymers with short molecular chains and a strong increase in viscosity compared to its components, which will then be mixed with additional elements according to the required characteristics, and finally packaged as a ready-to-use sealant or an adhesive in an *"additive oligomeric"* state that can be used for its intended purpose. The polymeric state will then be formed in situ, that is, when the sealant is applied and, due to moisture, the aforementioned short chains will connect to form the solid polymer.

The production process of the discontinuous type is the most widespread thanks to its operational flexibility, in which the additive of the adhesive in an oligomeric state is carried out in appropriate containers, or additive tanks preferably of the size of at least 1000 liters, where the additives are mixed under vacuum by high-power kneading machines in the order of 80-120 KW of power. Following the aforementioned mixing, the product is transferred to appropriate containers for packaging, for example, in metal drums, through the use of appropriate presses, possibly interposing the use of filters for the material.

All operations require a large number of personnel to provide for the washing of the reactor, the additive tanks, the kneading machine and possibly the filters used. The personnel are also employed for the management of the generated special and toxic waste to be disposed of.

The Japan Patent Application JP2019188383 A describes a cast nylon molding apparatus comprising two raw material tanks and two weighing means, one mixing and stirring unit and one mold. Each raw material tank is connected to measuring means, that in turn are connected to the mixing and stirring unit. Heaters are mounted on the outer peripheries of the raw material tanks so that the internal raw materials can be maintained at a predetermined temperature, preferable in a temperature range of 80 to 140 ° C, more preferable in a range of 90 to 120 ° C, in an inert gas atmosphere such as nitrogen gas in order to prevent adverse effects due to moisture and oxygen.

The production of polyurethane sealants by plants and known types of methods generates a high amount of waste, in particular connected with the washing of the elements used for each production cycle. For example, the washing of the additive tanks can be carried out with high-pressure water in a system equipped with water sanitization before discharge. The reactor and the kneading machines must be washed with non-flammable solvents, then partly recovered by distillation, and the resulting sludge becomes toxic waste. It is usual to reduce washing to consequently reduce the associated costs.

The waste, therefore, increases proportionally to the increase in cycle changes typically necessary for changes to the formulation of the polymer adhesive in relation to additive substances or substances capable of modifying one or more physical or chemical behaviours of the adhesive itself or its colouring.

Regardless of ethical and social problems, the disposal of this waste implies a high cost for the producing companies due to the high quantity of water and chemicals to be used for cleaning operations, as well as the downtime of the plant and the specialized resources to be used. The disposal of wastewater must also be treated as special waste, with costs that increase the price of the polymer adhesive produced.

It would therefore be desirable to have a method and a production plant of polymer sealants and adhesives capable of minimizing the drawbacks set out above. It would therefore be desirable to have a method and production plant of polymer sealants and adhesives capable of reducing costs associated with the disposal of the waste generated while maintaining high productivity. In particular, it would be desirable to have a method and production plant of polymer sealants and adhesives capable of reducing the downtime resulting from cycle changes. It would also be desirable to have a method and production plant capable of reducing the energy consumption and the costs associated with the personnel employed.

### Summary of the invention

The purpose of this invention is to provide a method and a plant for the production of polymer adhesives capable of minimizing the aforementioned problems.

In this regard, the purpose of the present invention is to provide a method and plant for the production of polymer adhesives capable of reducing the associated production costs, both through the disposal of the waste generated and the time and resources necessary to make a cycle change.

In this regard, the purpose of the present invention is to provide a method and a plant for the production of polymer adhesives, able to reduce the time required for cleaning operations and guarantee a reduced need for water and chemical agents for the completion of the above-mentioned cleaning.

The above-mentioned purposes are achieved by a method of manufacturing polymeric adhesives, according to claim 1, comprising the steps of:
- dosing of the base material into a mixer by means of a first metering device;
- dosing of the catalyst material into the mixer by means of a second metering device;
- mixing the base material and the catalyst material in a mixture by means of the mixer;
- packing the mixture in storage containers;

the method of manufacturing polymeric adhesives is **characterized in that** it comprises a step of managing a first temperature, by means of first temperature control means of the base material and catalyst material, wherein the base material and the catalyst material are kept within a predetermined range of temperature such as to prevent the formation in the mixer of the polymeric adhesive in an oligomeric state,
wherein the method of manufacturing comprising a step of managing a second temperature, by means of second temperature control means of the mixture, wherein the mixture is kept within the predetermined range of temperature such as to prevent the formation in the storage containers of the polymeric adhesive in an oligomeric state, and
wherein the method of manufacturing comprises a step of cooling the storage containers able to slow down the formation in the storage containers of the polymeric adhesive in an oligomeric state.

The method makes it possible to obtain a potential adhesive, therefore not immediately usable, but, at the same time, a significant reduction in costs and management in production and cycle changes as the maintenance of the predetermined temperature range allows to prevent or slow down the formation of reactive materials which, therefore, will not be present in the portions of the plant used, greatly simplifying the subsequent cleaning.

In a further embodiment, the range of temperature is comprised between - 5°C and +90°C, preferably between +1°C and +55°C, more preferably between +2°C and +50°C.

This temperature range makes it possible to prevent, or in any case to slow down considerably, the forming of an oligomeric state of the adhesive with the relative formation of reactive material.

In a further embodiment, the method of manufacturing comprises a step of heating said storage containers able to speed up the formation in said storage containers of said polymeric adhesive in an oligomeric state.

The heating phase allows managing the formation in the storage container of the adhesive in an oligomeric state, this formation being accelerated by administering thermal energy.

The above-mentioned purposes are further achieved by a plant for the production of polymer adhesives, according to claim 4, comprising
- a first metering device able to dispense a base material;
- a second metering device able to dispense a catalyst material;
- a first mixer, arranged downstream, and in fluid connection with, the first and second metering devices and able to mix the base material with the catalyst material to obtain a mixture;
- storage containers suitable for storing the manufactured mixture;

wherein the plant (1;2) for the production of polymer adhesives comprises temperature control means are able to keep the base material and the catalyst material and/or the mixture within a predetermined range of temperature such as to prevent the formation in the mixer of the polymeric adhesive in an oligomeric state,
the plant (1; 2) for the production of polymer adhesives is **characterized in that** the temperature control means comprise a first temperature sensor and first cooling means arranged upstream each of the metering devices,
wherein the first cooling means are able to keep the base material and the catalyst material within the predetermined range of temperature,
wherein the temperature control means are able to keep the mixture within the predetermined range of temperature such as to prevent the formation in the storage containers of the polymeric adhesive in an oligomeric state,
wherein the temperature control means comprise a second temperature sensor arranged downstream the first mixer and second cooling means arranged at the first mixer,
wherein the second cooling means are able to keep the mixture within the predetermined range of temperature, and
wherein the plant comprises a storage warehouse of the storage containers arranged downstream the first metering device,
wherein the temperature control means comprise a third temperature sensor and third cooling means arranged at the storage warehouse,
wherein the third cooling means are able to keep the storage containers within the predetermined range of temperature such as to prevent or slow down the formation in the storage containers within storage warehouse of the polymeric adhesive in an oligomeric state.

The temperature control allows, therefore, to prevent, or in any case significantly slow down, the formation in the mixer of the adhesive in an oligomeric state, allowing a simple treatment in case of cleaning of the mixer, as well as in the storage containers, extending the useful life of the mixture obtained and simplifying the storage activities in the warehouse. The temperature control is carried out upstream of the mixer, so the substances placed inside it are at a temperature that prevents the start of the polymerization process. The temperature control is also carried out directly in the mixer, controlling the temperature of the substances arranged inside it in such a way as to prevent the start of the polymerization process. Finally, it is possible to determine an additional temperature control in packaging to determine a slippage in the initial stages of the change process into an oligomeric state

In a further embodiment, the range of temperature is comprised between - 5°C and +90°C, preferably between +1°C and +55°C, more preferably between +2°C and +50°C.

In a further embodiment, the temperature control means comprise heating means arranged at the storage warehouse,
wherein the heating means are able to speed up the formation in the storage containers within the storage warehouse of the polymeric adhesive in an oligomeric state.

Therefore, it is possible to determine an additional temperature control in packaging to determine a speeding up of the initial stages of the change process into an oligomeric state.

### Description of Drawings

These and further features and advantages of the present invention will become apparent from the disclosure of the preferred embodiment, wherein:
- Figure 1 is a schematic view of a first preferred embodiment of the plant for the production of polymer adhesives, in accordance with the present invention;
- Figure 2 is a schematic view of a second embodiment of the plant for the production of polymer adhesives, in accordance with the present invention.

### Detailed description of the invention

The term *"base material"* means, in the present invention, the basic material used for the realization of the polymeric adhesive without the catalyst material for polymerization.

The term *"catalyst material"* means, in the present invention, the catalyst material capable of allowing polymerization when in contact with the base material and under predetermined polymerization conditions.

The term *"additive material"* means, in the present invention, any additional material not strictly necessary for polymerization but used to improve one or more technical characteristics or one or more aesthetic characteristics of the polymer adhesive to be made.

The term *"material in monomeric state"* means*,* in the present invention, the mixed material comprising the base material and the catalyst material with no polymerization and with unformed reactive material, that is, when the base material and the catalyst material have not reacted or have reacted to form only a few monomers without a decisive increase in viscosity compared to the mixed materials.

The term *"material in oligomeric state"* means, in the present invention, the mixed material comprising the base material and the catalyst material with incomplete polymerization and with formed reactive material, that is, when the base material and the catalyst material have reacted to form the oligomers with a decisive increase in viscosity compared to the mixed materials.

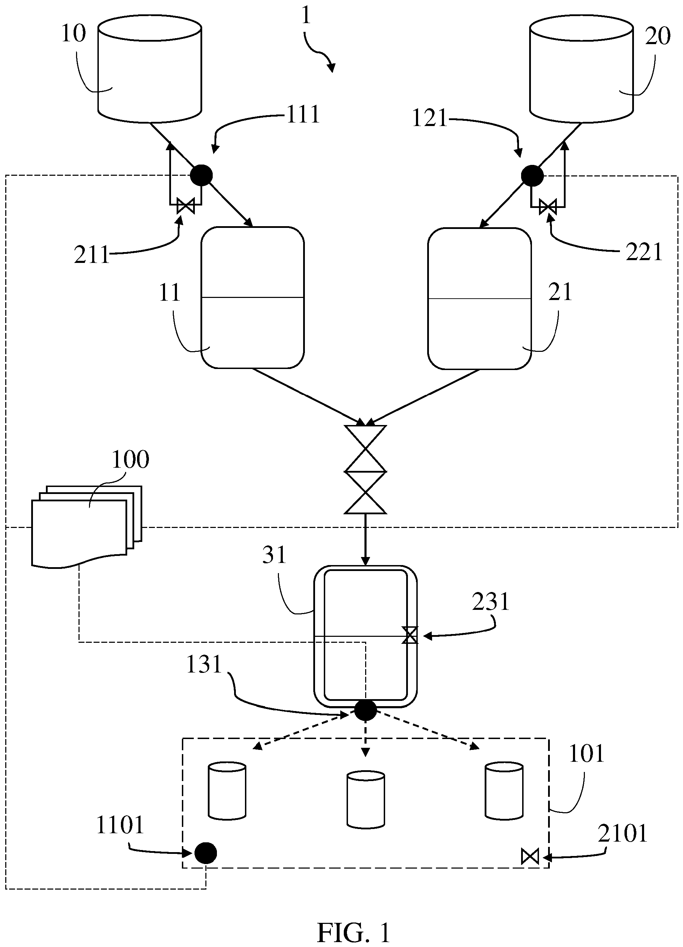

Figure 1 illustrates a preferred embodiment of the plant 1 for the production of polymer adhesives, where the plant components and their connections are represented in schematic form and are, therefore, susceptible to constructive or design changes.

The plant 1 for the production of polymer adhesives comprises a pair of metering devices, i.e. a first metering device 11 suitable for dosing the base material and a second metering device 21 for dosing the catalyst material.

These metering devices are shown side by side to indicate the same level of interaction for the downstream product. Additional metering devices at the same level of interaction are also possible, for example, to use multiple materials for the mixture at the same level of interaction. In the same way, it is possible to use multiple metering devices for the same material to allow a continuous flow of material. That is, while one of the metering devices doses the material, the additional metering device is prepared to be used in backup or sequential mode. In the last case described, the continuity of supply could be realized by filling an additional metering device during the emptying of the metering device in use.

Upstream of the first metering device 11 and the second 21 metering device respective containers of the materials used are arranged. In particular, a first dosing container 10 the base material, in fluid connection with the first metering device 11, and a second dosing container 20 the catalyst material, in fluid connection with the second metering device 21. It is also possible to use several dosing containers for the same metering device.

To allow better management of the material between the dosing container and the respective metering device, the plant 1 may include a bubble sensor, not illustrated, arranged between each dosing container and the respective metering device. In the case of detection of the bubble in the connecting pipeline, it is, therefore, possible to interrupt the dosing, arrange the material again in the dosing container and proceed with another dosing.

Furthermore, to allow a better management of plant 1 for the production of polymer adhesives according to the present invention, in other embodiment, a flow sensor is provided, not illustrated, arranged between each of the first 11 and second 21 metering devices and the first mixer 31. Such flow sensors can be made, for example, by means of a helix or worm screw device capable of accurately handling and dosing the materials used.

Downstream of the first 11 and second 21 metering devices, a first mixer is arranged 31 in fluid connection with the aforementioned first 11 and second 21 metering devices. The first mixer 31 allows, therefore, to mix the base material with the catalyst material to obtain a mixture defined by a material in a monomeric state, that is a material that includes both components necessary to obtain the polymer adhesive but not yet polymerized and therefore in which the reactive materials are not yet formed, or there are only a few monomers with a viscosity substantially equal to that of the mixed materials.

For this purpose, the plant 1 for the production comprises temperature control means able for keeping the base material and the catalyst material and/or the mixture within a predetermined temperature range, such as to prevent the formation within the first mixer 31 of the polymeric adhesive in an oligomeric state. The temperature control allows preventing the formation of the polymer adhesive in oligomeric form within the first mixer 31, allowing a simple treatment in case of cleaning of the mixer as the monomeric form greatly reduces the presence of reactive material to be cleaned.

This temperature range is between +1° C and +55°C, as, within this temperature range, the catalyst material is not able to allow the complete polymerization process and of making oligomers and the formation of the reactive material, that is, the above-mentioned processes are carried out within a very long time frame. Preferably this temperature can also be within a narrower range between +2°C and +50°C

At the same time, it is possible to use a temperature range between -5 ° C and + 90 ° C, although with some precautions regarding the processing timing. In particular, it is necessary to correlate the mixing time with the temperature used in such a way as to prevent the formation of the adhesive in an oligomeric state. By way of example, at a temperature of -5 ° C, the mixing time is at least thirty minutes, while at a temperature of + 90 ° C the mixing time is equal to a few seconds.

Therefore, the variables involved in determining the process of polymer formation in an oligomeric form are represented by temperature and time. The time as a function of the operating temperature can be determined as a linear function among the previously expressed values or as a non-linear function to be calculated by tests and experiments.

Temperature is, in fact, essential to avoid the start of polymerization and the formation of reactive materials defined by oligomers and, therefore, to keep the content of the first mixer in fluid conditions 31.

In this regard, as illustrated in the first embodiment of Figure 1, the temperature control means include a first temperature sensor 111, 121, each of which arranged upstream of the relative first 11 and second 21 metering devices, to monitor the inlet temperature of the materials within the aforementioned first 11 and second 21 metering devices. Furthermore, the temperature control means include first cooling means 211, 221 also arranged upstream of each of the first 11 and second 21 metering devices. For this purpose, the temperature control is carried out upstream of the first mixer 31, so the substances placed inside it are at a temperature that prevents the start of the polymerization process and the formation of reactive substances of oligomers. In particular, the first cooling means 211, 221 are able to keep the base material and catalyst material within the predetermined temperature range, as described above. Therefore, in the case of an inlet with temperatures above +55°C, for example, between +80°C and +90°C, the aforementioned first cooling means 211, 221 will cool the input material in each of the aforementioned first 11 and second 21 metering devices.

Alternatively or in addition, the temperature control means of the plant 1 for the production of polymer adhesives according to the present invention comprises a second temperature sensor 131 located downstream of the first mixer 31, therefore suitable for measuring the temperature output from the aforementioned first mixer 31 Furthermore, second cooling means 231 are, therefore, arranged at the first mixer 31 and capable of keeping the mixture within the aforementioned predetermined temperature range, as described above, and such as to prevent the formation of the polymeric adhesive in an oligomeric state within the first mixer 31.

In this way, the temperature control is also carried out directly in the first mixer 31, controlling the temperature of the substances arranged inside it in such a way as to prevent the start of the polymerization process. The temperature control at the outlet of the first mixer 31 is, therefore, very important to avoid that the aforementioned first mixer 31 does not act as a reactor in such a way as to keep the mixing capacity separate from the polymerization capacity or the realization of oligomers.

The second cooling means 231 of the first mixer 31 can be made in different ways. In an embodiment, these can be achieved by means of a heat exchanger. The latter could be placed within the first mixer 31, although not directly in contact with the materials to be mixed. The heat exchanger, which is not illustrated in detail, is not further described as it is of the known type.

Temperature control, therefore, makes it possible to avoid immediate polymerization of oligomers and to move this phase to a later time, downstream of the emptying of the first mixer 31.

The mixture made is, therefore, packaged by plant 1 in storage containers (not illustrated).

For this purpose, the temperature control means are able to keep the mixture within a predetermined temperature range, such as to prevent the formation in the storage containers of the adhesive in an oligomeric state.

In particular, downstream of the first mixer 31, the plant 1 for the production of polymer adhesives shown in the first embodiment of Figure 1 comprises a warehouse 101 for the storage of storage containers. For this purpose, the temperature control means include a third temperature sensor 1101, and the third cooling means 2101 arranged at the storage warehouse 101. These third cooling means are, therefore, able to keep the storage containers within a predetermined temperature range, such as to prevent the formation in the storage containers of the adhesive in an oligomeric state in the storage warehouse.

Therefore, it is possible to determine an additional temperature control in packaging to determine a slipping of the initial stages of the change process into an oligomeric state.

The temperature control means may also include heating means 2101 arranged at storage warehouse 101, wherein heating means 2101 are, unlike cooling means, designed to speed up the formation in the storage containers of the adhesive in an oligomeric state in the storage warehouse.

Therefore, it is possible to determine an additional temperature control in packaging to determine a speeding up of the initial stages of the change process into an oligomeric state.

The realization of the warehouse at a controlled temperature could also not be present in other embodiments or could be used only for a portion of the production.

In the first embodiment described in Figure 1, in the plant 1, appropriate computerized control means 100 are also illustrated operative connected to the temperature control means or to part of them. As shown in Figure 1, the computerized control means 100 are schematic illustrated with connection flows to the temperature sensors of the system but are considered connected to the entire system of temperature control means, that is, extending the connection flow also to the relative cooling means and any heating means. In the same way, the same computerized control means could allow production automation or the operation of both meters and the first mixer.

The present invention also relates to a method of manufacturing polymer adhesives by a plant for the production of polymer adhesives, for example, by plant 1 above described.

The method of manufacturing comprises the steps normally used in the production of polymer adhesives, of
- dosing of the base material, using the first metering device 11 of Figure 1;
- dosing of the catalyst material, using the second metering device 21 of Figure 1;
- mixing the base material and the catalyst material, where the mixing takes place by means of the first mixer 31 shown in Figure 1;
- packaging of the mixture within storage containers (not illustrated).

The method of manufacturing polymer adhesives according to the present invention also comprises the step of managing a first temperature, by means of the first temperature control means, wherein the base material and the catalyst material are kept within a predetermined temperature range such as to prevent the formation in the first mixer 31 of the adhesive in an oligomeric state, and the step of managing a second temperature, by means of second temperature control means, wherein the mixture is kept within a predetermined temperature range such as to prevent the formation in the storage containers of the adhesive in an oligomeric state.

The method makes it possible to obtain a potential adhesive, therefore not immediately usable, but, at the same time, a significant reduction in costs and management in production and cycle changes as the maintenance of the predetermined temperature range permits to prevent or slow down the formation of reactive materials which, therefore, will not be present in the portions of the plant used, greatly simplifying the subsequent cleaning.

As described above, this temperature range is between +1°C and +55°C. Preferably this temperature can also be within a narrower range between +2°C and +50°C. In the same way, a wider temperature range can be used, for example, from -5°C to +90°C, depending on the mixing time, as described above.

This temperature range makes it possible to prevent, or in any case to slow down considerably, the forming of an oligomeric state of the adhesive with the relative formation of reactive material.

Therefore, temperature control can be carried out in the above steps, taking up what was described above for plant 1 of the first embodiment, where the work phases can be used to define further phases of the method according to the present invention.

Preferably, the method of manufacturing polymer adhesives comprises a further step of cooling the storage containers to slow down the forming in the storage containers of the adhesive in an oligomeric state.

In the same way, the method of manufacturing polymer adhesives comprises a further step of heating the storage containers to speed up the forming in the storage containers of the adhesive in an oligomeric state.

The heating and cooling steps permit the management of the formation of the adhesive in an oligomeric state in the storage containers. This formation can be accelerated by administering thermal energy or, vice-versa, slowed down by subtracting thermal energy.

Furthermore, the method of manufacturing polymer adhesives could include further steps, for example, related to the use of additive material as described below for the plant of the second embodiment, the working steps of which may be used to define further steps of the method according to this invention.

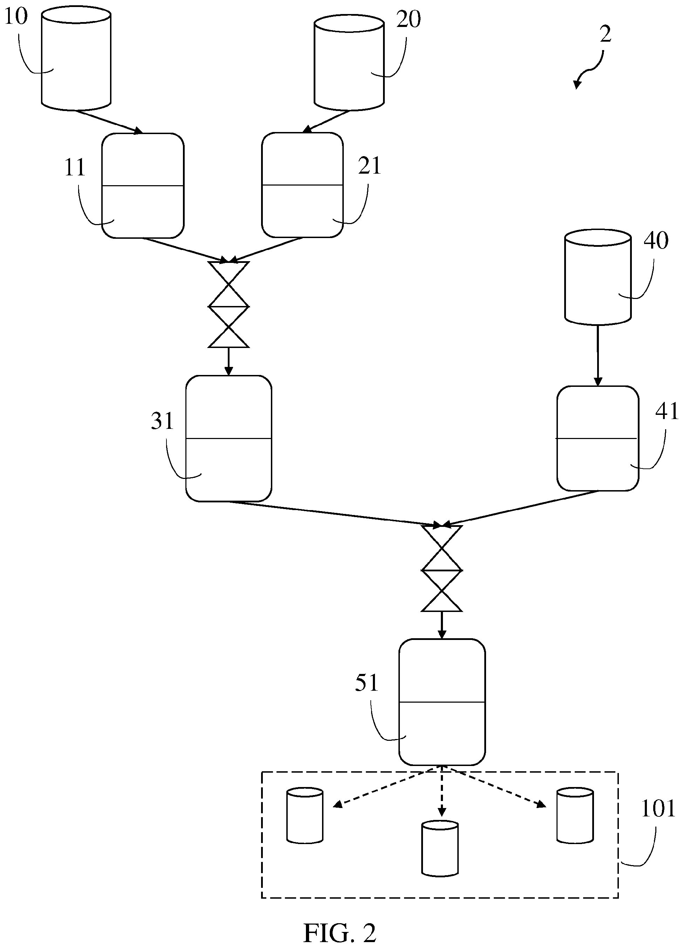

Figure 2 illustrates a second embodiment of plant 2 for the production of polymer adhesives, wherein the plant components and their connections are represented in schematic form and are, therefore, susceptible to constructive or design changes.

As described above for plant 1 for the production of polymer adhesives according to the first embodiment, plant 2 for the production of polymer adhesives includes a pair of metering devices, i.e. a first metering device 11, able for dosing the base material, and a second metering device 21, able for dosing the catalyst material, and a first mixer 31 arranged downstream of the first 11 and second 21 metering devices.

Upstream of the first metering device 11 and the second metering device 21, are arranged the respective containers of the materials used. In particular, a first dosing container 10 of the base material, in fluid connection with the first metering devices 11, and a second dosing container 20 of the catalyst material, in fluid connection with the second metering device 21. It is also possible to use several dosing containers for the same metering device.

Furthermore, and unlike what was illustrated in the previous embodiment, plant 2 includes a third metering device, arranged downstream and in fluid connection with the first said mixer 31, and at least a fourth metering device 41 suitable for dosing the additive material.

In particular, in the embodiment of Figure 2, the third metering device is defined directly by the first mixer 31 but could still be realized by means of a separate device.

A second mixer 51 is arranged downstream, and in fluid connection with, said third metering devices (the first mixer 31) and said fourth metering device 41, suitable to mix the monomeric material with the additive material to obtain a monomeric additive material.

Upstream of the fourth metering device 41, there is a respective third dosing container 40 of the materials used, or a container of additive material, for example, suitable for defining a predetermined colour to the polymer adhesive. It is also possible to use several dosing containers for the same metering device.

Plant 2 according to the present invention also comprises temperature control means able to keep the mixture and the additive and/or the mixture provided with the additive within a predetermined temperature range such as to prevent the formation in the second mixer 51of the adhesive in an oligomeric state.

As described above, this temperature range is between +1°C and +55°C. Preferably this temperature can be within a narrower range between +2°C and +50°C. In the same way, a wider temperature range can be used, for example from -5°C to +90°C, depending on the mixing time, as previously described.

Temperature is, in fact, essential to avoid the production of oligomers and therefore, to keep the fluid conditions of the content also in the second mixer 51.

In this regard, as already illustrated and described in the first embodiment of Figure 1, of which the same technical features are taken up, the temperature control means can include a first temperature sensor, each of which arranged upstream of the relative first 11 and second 21 metering devices, to monitor the inlet temperature of the materials within the aforementioned first 11 and second 21 metering devices. Furthermore, the means of temperature control can include the first cooling means also arranged upstream of each of the first 11 and second 21 metering devices. In particular, the first cooling means are designed to keep the base material and catalyst material within the predetermined temperature range, as described above, to prevent the formation of the adhesive in an oligomeric state within the first mixer 31 and within the second mixer 51.

Alternatively, or in addition, the temperature control means of plant 2 for the production of polymer adhesives according to the present invention comprise a second temperature sensor located downstream of the first mixer 31, therefore able to measure the temperature output from the aforementioned first mixer 31. Furthermore, second cooling means could be arranged at the first mixer 31 suitable for keeping the mixture within the aforementioned predetermined temperature range, as described above, and such as to prevent the formation in the first mixer 31 of the adhesive in an oligomeric state.

Alternatively, or in addition, the temperature control means of plant 2 for the production of polymer adhesives according to the present invention can include a third temperature sensor located upstream of the fourth metering device 41, for measuring the temperature input from the aforementioned first mixer 41 Furthermore, the temperature control means could include third cooling means also arranged upstream of the fourth second 41 metering devices. In particular, the temperature control means are suitable for keeping the additive material within a predetermined temperature range, such as to prevent the formation in the second mixer 51 of the adhesive in an oligomeric state.

Lastly, alternatively or in addition, the temperature control means of plant 2 for the production of polymer adhesives according to the present invention can include a fourth temperature sensor located downstream of the second mixer 51, therefore suitable for measuring the temperature output from the aforementioned mixer 51 Furthermore, fourth cooling means can be arranged at the second mixer 51 suitable to keep the mixture within the aforementioned predetermined temperature range, as described above, and such as to prevent the formation in the second mixer 51 of the polymeric adhesive in an oligomeric state.

The temperature control at the outlet of the second mixer 51 is, therefore, very important to avoid that, as described above for the first mixer 31, the aforementioned second mixer 51 does not act as a reactor, keeping the mixing capacity separate from the polymerization capacity.

Also, in this embodiment, the fourth cooling means of the second mixer 51 can be realized in different ways, for example, by means of a heat exchanger placed within the second mixer 51, even if not directly in contact with the materials to be mixed.

In this way, it is possible to add the additive elements to the composition during the final stage, when the polymerization process in the realization of oligomers has not yet begun, allowing the considerable simplification in subsequent cycle change operations. Such additive materials can be, for example, colouring materials that will not thus impact the second mixer in terms of cleaning and change of cycle. Temperature control, therefore, makes it possible to avoid immediate polymerization and to move this phase to a later time, downstream of the emptying of the first mixer 51

Lastly, downstream of the first mixer 51, the polymer adhesive production plant 2 shown in the second embodiment of Figure 2 comprises a warehouse 101 for the storage of containers coming from the same second mixer 51. The aforementioned storage warehouse 101 corresponds to what has already been described for plant 1 of the first embodiment and, therefore, will not be further discussed.

As illustrated, in this case, the storage warehouse 101 is arranged only downstream of the second mixer 51, being the first mixer 31 directly usable as a third metering device. In the event that, conversely, the first mixer is separated from the third metering device, it is possible to provide for a configuration in which the storage warehouse is also located downstream of the first mixer, where part of the production can be carried out without the use of additive material from the fourth metering device.

Furthermore, plant 2 could be equipped with appropriate computerized control means (not illustrated) operationally connected to the temperature control means (not illustrated) or to part of them. The computerized control means, as well as the temperature control means, also correspond to what has already been described in plant 1 of the first embodiment and, therefore, will not be further discussed.

Both in plant 1 according to the first embodiment and in plant 2 according to the second embodiment, it is possible to use mechanical metering devices or electrically actuated metering devices, for example, operated by brushless motors. In both cases, it is possible to use a PLC for the control of the dosages.

Although not preferred, it is possible to use in place of the appropriate metering devices flow meters of the mechanical or electronic type that have high precision but a very difficult control.

The plant and the method for manufacturing polymeric sealants and adhesives according to the present invention allows, therefore, to achieve high productivity while maintaining a reduced ecological impact and, consequently, a reduced cost in the production phases

The automation of the control, as well as the mere management of the temperature to avoid polymerization already in the mixers of the plant, permit the use of reduced personnel and, at the same time, a reduction in energy consumption.

In addition, the plant, according to the present invention, requires reduced investments, as the technical solutions used to solve the identified problems can be realized with reduced costs.

The method for manufacturing also offers significant economic advantages in terms of reducing production costs and simplifying production management thanks to the ability to reduce the number of personnel employed. The production line can be fully automated, from the management of the dispensing containers to the storage warehouse, for example, by using a single operator assisted by a PLC for the control of the entire plant.

The method and the plant according to the present invention make it possible to considerably reduce the waste generated and, consequently, the associated costs in relation to the reduced need for washing the means used with solvents or the generation of special and toxic waste.

The method and the plant, according to the present invention, allow changes cycle in a simplified way, modifying the formulations used in the production without the need for cycle change washes.

In the same way, the method and the plant according to the present invention allow to significantly reduce energy consumption compared to methods and plants of the known type because operating with low viscosity material (with unformed reactive material) it is not necessary to use high powered motors.

## Claims

1. A method of manufacturing polymeric adhesives comprising the steps of:
- dosing of the base material into a mixer (31) by means of a first metering device (11);
- dosing of the catalyst material into said mixer (31) by means of a second metering device (21);
- mixing said base material and said catalyst material in a mixture by means of said mixer (31);
- packing said mixture in storage containers;
said method of manufacturing polymeric adhesives is **characterized in that** it comprises a step of managing a first temperature, by means of first temperature control means of said base material and catalyst material, wherein said base material and said catalyst material are kept within a predetermined range of temperature such as to prevent the formation in said mixer (31) of said polymeric adhesive in an oligomeric state,
wherein said method of manufacturing comprising a step of managing a second temperature, by means of second temperature control means of said mixture, wherein said mixture is kept within said predetermined range of temperature such as to prevent the formation in said storage containers of said polymeric adhesive in an oligomeric state, and
wherein said method of manufacturing comprises a step of cooling said storage containers able to slow down the formation in said storage containers of said polymeric adhesive in an oligomeric state.

2. The method of manufacturing polymeric adhesives according to claim 1, wherein said range of temperature is comprised between -5°C and +90°C, preferably between +1°C and +55°C, more preferably between +2°C and +50°C.

3. The method of manufacturing polymeric adhesives according to claim 1 or 2, comprising a step of heating said storage containers able to speed up the formation in said storage containers of said polymeric adhesive in an oligomeric state.

4. A plant (1; 2) for the production of polymeric adhesives comprising:
- a first metering device (11) able to dispense a base material;
- a second metering device (21) able to dispense a catalyst material;
- a first mixer (31), arranged downstream, and in fluid connection with, said first and second metering device (11, 21) and able to mix said base material with said catalyst material to obtain a mixture;
- storage containers suitable for storing the said manufactured mixture; wherein said plant (1; 2) for the production of polymeric adhesives comprises temperature control means are able to keep said base material and said catalyst material and/or said mixture within a predetermined range of temperature such as to prevent the formation in said mixer (31) of said polymeric adhesive in an oligomeric state,
said plant (1; 2) for the production of polymeric adhesives is **characterized in that** said temperature control means comprise a first temperature sensor (111, 121) and first cooling means (211, 221) arranged upstream each of said metering devices (11, 21),
wherein said first cooling means (211, 221) are able to keep said base material and said catalyst material within said predetermined range of temperature, wherein said temperature control means are able to keep said mixture within said predetermined range of temperature such as to prevent the formation in said storage containers of said polymeric adhesive in an oligomeric state,
wherein said temperature control means comprise a second temperature sensor (131) arranged downstream said first mixer (31) and second cooling means (231) arranged at said first mixer (31),
wherein said second cooling means (231) are able to keep said mixture within said predetermined range of temperature, and
wherein said plant comprises a storage warehouse (101) of said storage containers arranged downstream said first metering device (31),
wherein said temperature control means comprise a third temperature sensor (1101) and third cooling means (2101) arranged at said storage warehouse (101),
wherein said third cooling means (2101) are able to keep said storage containers within said predetermined range of temperature such as to prevent or slow down the formation in said storage containers within said storage warehouse of said of said polymeric adhesive in an oligomeric state.

5. The plant (1) for the production of polymeric adhesives according to claim 4, wherein said range of temperature is comprised between -5°C and +90°C, preferably between +1°C and +55°C, more preferably between +2°C and +50°C.

6. The plant (1) for the production of polymeric adhesives according to claim 4 or 5, wherein said temperature control means comprise heating means (2101) arranged at said storage warehouse (101),
wherein said heating means (2101) are able to speed up the formation in said storage containers within said storage warehouse of said of said polymeric adhesive in an oligomeric state.

## Patentansprüche

1. Ein Verfahren zur Herstellung von Polymerklebstoffen, welches folgende Schritte umfasst:
- Die Dosierung des Grundmaterials in einen Mischer (31) mit Hilfe einer ersten Dosiervorrichtung (11);
- Die Dosierung des Katalysatormaterials in den genannten Mischer (31) mit Hilfe einer zweiten Dosiervorrichtung (21);
- Das Vermischen des genannten Grundmaterials und des genannten Katalysatormaterials zwecks Entstehung einer Mischung mit Hilfe des genannten Mischers (31);
- Das Abfüllen der genannten Mischung in entsprechende Lagerbehälter; wobei das genannte Verfahren zur Herstellung von Polymerklebstoffen **dadurch gekennzeichnet ist, dass** es den Schritt der Regelung einer ersten Temperatur umfasst, und zwar mit Hilfe von ersten Temperaturkontrollelementen des genannten Grundmaterials und Katalysatormaterials, wobei das genannte Grundmaterial und das genannte Katalysatormaterial jeweils innerhalb eines vorbestimmten Temperaturbereichs gehalten werden, so dass die Entstehung eines oligomeren Zustands des genannten Polymerklebstoffs in dem genannten Mischer (31) verhindert wird,
wobei das genannte Verfahren zur Herstellung den Schritt der Regelung einer zweiten Temperatur umfasst, und zwar mit Hilfe zweiter Temperaturkontrollelemente der genannten Mischung, wobei die genannte Mischung innerhalb des genannten vorbestimmten Temperaturbereichs gehalten wird, so dass die Entstehung eines oligomeren Zustands des genannten Polymerklebstoffs in den genannten Lagerbehältern verhindert wird, und
wobei das genannte Verfahren zur Herstellung den Schritt der Kühlung der genannten Lagerbehälter umfasst, welcher die Entstehung eines oligomeren Zustands des Polymerklebstoffs in den genannten Lagerbehältern verlangsamen kann.

2. Das Verfahren zur Herstellung von Polymerklebstoffen gemäß Anspruch 1, wobei der genannte Temperaturbereich jeweils zwischen -5°C und +90°C liegt, vorzugsweise zwischen +1°C und +55°C, mehr vorzugsweise zwischen +2°C und +50°C.

3. Das Verfahren zur Herstellung von Polymerklebstoffen gemäß Anspruch 1 oder 2, welches den Schritt der Erhitzung der genannten Lagerbehälter umfasst, der die Entstehung eines oligomeren Zustands des genannten Polymerklebstoffs in den genannten Lagerbehältern beschleunigen kann.

4. Eine Anlage (1, 2) für die Herstellung von Polymerklebstoffen, welche jeweils folgendes umfasst:
- eine erste Dosiervorrichtung (11), welche ein Grundmaterial ausgeben kann;
- eine zweite Dosiervorrichtung (21), welche ein Katalysatormaterial ausgeben kann;
- einen ersten Mischer (31), der nachgelagert angeordnet ist und in fluider Verbindung mit der genannten ersten und zweiten Dosiervorrichtung (11, 21) steht sowie in der Lage ist, das genannte Grundmaterial mit dem genannten Katalysatormaterial zu vermischen, um eine entsprechende Mischung zu erhalten;
- Lagerbehälter, welche für die Lagerung der genannten hergestellten Mischung geeignet sind;
wobei die genannte Anlage (1, 2) für die Herstellung von Polymerklebstoffen jeweils entsprechende Temperaturkontrollelemente umfasst, die in der Lage sind, das genannte Grundmaterial und das genannte Katalysatormaterial und/oder die genannte Mischung innerhalb eines vorbestimmten Temperaturbereichs zu halten, so dass die Entstehung eines oligomeren Zustands des genannten Polymerklebstoffs in dem genannten Mischer (31) verhindert wird,
wobei die genannte Anlage (1, 2) für die Herstellung von Polymerklebstoffen **dadurch gekennzeichnet ist, dass** die genannten Temperaturkontrollelemente jeweils einen ersten Temperatursensor (111, 121) und erste Kühlelemente (211, 221) umfassen, die jeweils den genannten Dosiervorrichtungen (11, 21) vorgelagert angeordnet sind,
wobei die genannten ersten Kühlelemente (211, 221) in der Lage sind, das genannte Grundmaterial und das genannte Katalysatormaterial innerhalb des genannten vorbestimmten Temperaturbereichs zu halten,
wobei die genannten Temperaturkontrollelemente in der Lage sind, die genannte Mischung innerhalb des genannten vorbestimmten Temperaturbereichs zu halten, so dass die Entstehung eines oligomeren Zustands des genannten Polymerklebstoffs in den genannten Lagerbehältern verhindert wird,
wobei die genannten Temperaturkontrollelemente jeweils einen zweiten Temperatursensor (131) umfassen, der dem ersten Mischer (31) nachgelagert angeordnet ist, sowie zweite Kühlelemente (231), die an dem genannten ersten Mischer (31) angeordnet sind,
wobei die genannten zweiten Kühlelemente (231) in der Lage sind, die genannte Mischung innerhalb des genannten vorbestimmten Temperaturbereichs zu halten, und
wobei die genannte Anlage ein Vorratslager (101) für die genannten Lagerbehälter umfasst, das den genannten ersten Dosiervorrichtungen (31) nachgelagert angeordnet ist,
wobei die genannten Temperaturkontrollelemente jeweils einen dritten Temperatursensor (1101) und dritte Kühlelemente (2101) umfassen, welche an dem genannten Vorratslager (101) angeordnet sind,
wobei die genannten dritten Kühlelemente (2101) in der Lage sind, die genannten Lagerbehälter innerhalb des genannten vorbestimmten Temperaturbereichs zu halten, so dass die Entstehung eines oligomeren Zustands des genannten Polymerklebstoffs in den genannten Lagerbehälter in dem genannten Vorratslager vermieden oder verlangsamt wird.

5. Die Anlage (1) für die Herstellung von Polymerklebstoffen gemäß Anspruch 4, wobei der genannte Temperaturbereich jeweils zwischen -5°C und +90°C, vorzugsweise zwischen +1°C und +55°C, mehr vorzugsweise zwischen +2°C und +50°C liegt.

6. Die Anlage (1) für die Herstellung von Polymerklebstoffen gemäß Anspruch 4 oder 5, wobei die genannten Temperaturkontrollelemente jeweils entsprechende Heizelemente (2101) umfassen, welche an dem genannten Vorratslager (101) angeordnet sind,
wobei die genannten Heizelemente (2101) in der Lage sind, die Entstehung eines oligomeren Zustands der genannten Polymerklebstoffe in den genannten Lagerbehälter in dem genannten Vorratslager zu beschleunigen.

## Revendications

1. Procédé de fabrication d'adhésifs polymères comprenant les étapes consistant à :
- doser du matériau de base dans un mélangeur (31) au moyen d'un premier dispositif de dosage (11) ;
- doser du matériau catalyseur dans ledit mélangeur (31) au moyen d'un second dispositif de dosage (21) ;
- mélanger ledit matériau de base et ledit matériau catalyseur dans un mélange au moyen dudit mélangeur (31) ;
- emballer ledit mélange dans des récipients de stockage ;
ledit procédé de fabrication d'adhésifs polymères est **caractérisé en ce qu'**il comprend une étape de gestion d'une première température, au moyen de premiers moyens de contrôle de la température dudit matériau de base et du matériau catalyseur, dans laquelle ledit matériau de base et ledit matériau catalyseur sont maintenus dans une plage de température prédéterminée de manière à empêcher la formation dans ledit mélangeur (31) dudit adhésif polymère à l'état oligomérique,
dans lequel ledit procédé de fabrication comprend une étape de gestion d'une seconde température, au moyen de seconds moyens de contrôle de la température dudit mélange, dans lequel ledit mélange est maintenu dans ladite plage de température prédéterminée de manière à empêcher la formation dans lesdits récipients de stockage dudit adhésif polymère à l'état oligomérique, et
dans lequel ledit procédé de fabrication comprend une étape de refroidissement desdits récipients de stockage apte à ralentir la formation dans lesdits récipients de stockage dudit adhésif polymère à l'état oligomérique.

2. Procédé de fabrication d'adhésifs polymères selon la revendication 1, dans lequel ladite plage de température est comprise entre -5°C et +90°C, de préférence entre +1°C et +55°C, plus préférablement entre +2°C et +50°C.

3. Procédé de fabrication d'adhésifs polymères selon la revendication 1 ou 2, comprenant une étape de chauffage desdits récipients de stockage apte à accélérer la formation dans lesdits récipients de stockage dudit adhésif polymère à l'état oligomérique.

4. Installation (1; 2) pour la production d'adhésifs polymères comprenant :
- un premier dispositif de dosage (11) apte à distribuer un matériau de base ;
- un second dispositif de dosage (21) apte à distribuer un matériau catalyseur ;
- un premier mélangeur (31), disposé en aval et en connexion fluidique avec lesdits premier et second dispositifs de dosage (11, 21) et apte à mélanger ledit matériau de base avec ledit matériau catalyseur pour obtenir un mélange ;
- des récipients de stockage aptes à stocker ledit mélange fabriqué ; dans laquelle ladite installation (1 ; 2) pour la production d'adhésifs polymères comprend des moyens de contrôle de la température aptes à maintenir ledit matériau de base et ledit matériau catalyseur et/ou ledit mélange dans une plage de température prédéterminée de manière à empêcher la formation dans ledit mélangeur (31) dudit adhésif polymère à l'état oligomérique,
ladite installation (1 ; 2) pour la production d'adhésifs polymères est **caractérisée en ce que** lesdits moyens de contrôle de la température comprennent un premier capteur de température (111, 121) et des premiers moyens de refroidissement (211, 221) disposés en amont de chacun desdits dispositifs de dosage (11, 21),
dans laquelle ces premiers moyens de refroidissement (211, 221) sont aptes à maintenir ledit matériau de base et ledit matériau catalyseur dans la plage de température prédéterminée,
dans laquelle lesdits moyens de contrôle de la température sont aptes à maintenir ledit mélange dans ladite plage de température prédéterminée de manière à empêcher la formation, dans lesdits récipients de stockage, dudit adhésif polymère à l'état oligomérique, dans laquelle lesdits moyens de contrôle de la température comprennent un second capteur de température (131) placé en aval dudit premier mélangeur (31) et des seconds moyens de refroidissement (231) placés au niveau dudit premier mélangeur (31), dans laquelle lesdits seconds moyens de refroidissement (231) sont aptes à maintenir ledit mélange dans ladite plage de température prédéterminée, et
dans laquelle ladite installation comprend un entrepôt de stockage (101) desdits récipients de stockage disposés en aval dudit premier dispositif de dosage (31),
dans laquelle lesdits moyens de contrôle de la température comprennent un troisième capteur de température (1101) et des troisièmes moyens de refroidissement (2101) disposés dans ledit entrepôt de stockage (101),
dans laquelle lesdits troisièmes moyens de refroidissement (2101) sont aptes à maintenir lesdits récipients de stockage dans ladite plage de température prédéterminée de manière à empêcher ou à ralentir la formation dans lesdits récipients de stockage au sein dudit entrepôt de stockage dudit adhésif polymère à l'état oligomérique.

5. Installation (1) pour la production d'adhésifs polymères selon la revendication 4, dans laquelle la plage de température est comprise entre -5°C et +90°C, de préférence entre +1°C et +55°C, plus préférablement entre +2°C et +50°C.

6. Installation (1) pour la production d'adhésifs polymères selon la revendication 4 ou 5, dans laquelle lesdits moyens de contrôle de la température comprennent des moyens de chauffage (2101) disposés dans ledit entrepôt de stockage (101),
dans lequel lesdits moyens de chauffage (2101) sont aptes à accélérer la formation, dans lesdits récipients de stockage à l'intérieur dudit entrepôt de stockage, dudit adhésif polymère à l'état oligomérique.
